Europäisches Patentamt

European Patent Office

Office européen des brevets

(11) Veröffentlichungsnummer: **0 187 305**
**B1**

(12) **EUROPÄISCHE PATENTSCHRIFT**

(45) Veröffentlichungstag der Patentschrift: **31.10.90**

(51) Int. Cl.⁵: **H 01 M 10/39**

(21) Anmeldenummer: **85115864.2**

(22) Anmeldetag: **12.12.85**

(54) Elektrochemische Speicherzelle.

(30) Priorität: **21.12.84 DE 3446779**

(43) Veröffentlichungstag der Anmeldung:
**16.07.86 Patentblatt 86/29**

(45) Bekanntmachung des Hinweises auf die Patenterteilung:
**31.10.90 Patentblatt 90/44**

(84) Benannte Vertragsstaaten:
**BE FR GB IT NL**

(56) Entgegenhaltungen:
**FR-A-2 248 617**
**GB-A-1 472 975**
**GB-A-2 126 774**
**US-A-4 070 527**
**US-A-4 127 634**
**US-A-4 243 733**

(73) Patentinhaber: **Asea Brown Boveri**
**Aktiengesellschaft**
**Kallstadter Strasse 1**
**D-6800 Mannheim-Käfertal (DE)**

(72) Erfinder: **Steinleitner, Günther, Dr. Dipl.-Chem.**
**Hans-Pfitzner-Strasse 1**
**D-6905 Schriesheim (DE)**
Erfinder: **Rozé, Philippe**
**Ahornweg 11**
**D-6908 Wiesloch-Baiertal (DE)**

(74) Vertreter: **Rupprecht, Klaus, Dipl.-Ing. et al**
**c/o Asea Brown Boveri Aktiengesellschaft**
**Zentralbereich Patente Postfach 100351**
**D-6800 Mannheim 1 (DE)**

## Beschreibung

Die Erfindung bezieht sich auf eine elektrochemische Speicherzelle gemäß dem Oberbegriff des Patentanspruches 1.

Solche elektrochemischen Speicherzellen eignen sich sehr gut als Energiequellen. Sie finden in vermehrtem Maße ihre Anwendung beim Aufbau von Speicherbatterien, die zur Stromversorgung von Elektrofahrzeugen vorgesehen sind.

Ein spezielles Beispiel für diese Speicherzellen sind solche auf der Basis von Natrium und Schwefel, die wiederaufladbar sind und einen Festelektrolyten aus Betaaluminiumoxid besitzen, der den Anodenraum vom Kathodenraum trennt. Als Vorteil dieser Speicherzellen ist hervorzuheben, daß bei ihrem Laden keine elektrochemischen Nebenreaktionen ablaufen, und die Stromausbeute daher bei etwa 100% liegt. Bei solchen Speicherzellen ist der Anodenraum mit Natrium gefüllt, und innerhalb des becherförmigen Festelektrolyten angeordnet. Der Kathodenraum liegt zwischen dem Festelektrolyten und dem metallischen Gehäuse, welches die Speicherzellen nach außenhin begrenzt. Innerhalb des Kathodenraums ist bei den bis jetzt bekannten Speicherzellen ein langfasriges Material aus Graphit oder Kohlenstoff angeordnet, das zur Bildung der Schwefelelektrode mit Schwefel getränkt ist. Bei der Herstellung der Speicherzellen werden aus dem faserförmigen Material halbschalenförmige Elemente geformt, mit Schwefel getränkt und dann in den Kathodenraum eingesetzt. Die Fertigung der Speicherzellen erfolgt bei Raumtemperatur. Für den Betrieb müssen die Speicherzellen auf eine Temperatur von 350°C aufgeheizt werden. Wird eine Speicherzelle einem solchen Temperatureinfluß ausgesetzt, so kommt es zu einer Ausdehnung des Fasermaterials, insbesondere der beiden Halbschalen, die im Kathodenraum angeordnet sind. Sie dehnen sich soweit aus, daß ihre Stirnflächen bündig aneinander stoßen und die Fasern der einen Hälfte in die Fasern der anderen Hälfte übergreifen, so daß kein Zwischenraum mehr im Grenzbereich der Halbschalen verbleibt. Beim Entladen der Speicherzellen wandern die im Anodenraum enthaltenen Natriumionen durch den Festelektrolyten hindurch in den Kathodenraum und bilden dort mit dem vorhandenen Schwefel das Natriumpolysulfid. Aufgrund dessen, daß die beiden aus dem langfasrigen Material gebildeten Halbschalen sich nunmehr eng berühren, kann sich das Natriumpolysulfid gleichmaßig, insbesondere auch über die Grenzflächen der beiden Halbschalen hinweg im Kathodenraum verteilen. Wird eine solche Speicherzelle, die größere Mengen Natriumpolysulfid im Kathodenraum enthält, abgekühlt, so erstarrt dieses zu einem geschlossenen Ring, der den Festelektrolyten fest umgibt. Das Natriumpolysulfid weist einen höheren thermischen Ausdehnungskoeffizienten als das Betaaluminiumoxid auf, aus dem der Festelektrolyt gefertigt ist. Dies bedeutet, daß der sich aus dem Natriumpolysulfid bildende Ring beim Erkalten auf den Festelektrolyten aufschrumpft. Dadurch haftet er sehr fest auf den Außenflächen des Festelektrolyten und übt bei abnehmender Temperatur Kräfte auf selbigen aus, was durch die unterschiedlichen thermischen Ausdehnungskoeffizienten der beiden Materialien bedingt wird. Diese Scherkräfte können auf Dauer zu einer Rißbildung an dem Festelektrolyten und damit zu einer Zerstörung der gesamten Speicherzelle führen.

Aus der GB—A—2126774 ist ein Verfahren zur Herstellung einer elektrochemischen Speicherzelle auf der Basis von Natrium und Schwefel bekannt. Der Kern des Verfahrens ist der Verschluß der Speicherzelle durch Thermokompression, wodurch eine hermetische Abdichtung der Speicherzelle nach außen hin gewährleistet wird. Aus der US—PS—4070527 ist eine elektrochemische Speicherzelle mit verbesserter Schwefelelektrode bekannt. Für die Fertigung der Schwefelelektrode wird poröser Kohlenstoff verwendet, der als Filz oder in Form von Fasern ausgebildet ist.

In der FR—A—2248617 ist eine elektrochemische Speicherzelle beschrieben, die neben einem Anodenraum und einem Kathodenraum noch einen Vorratsbehälter für das im Anodenraum angeordnete Natrium aufweist. Der Vorratsbehälter ist über der Öffnung der Speicherzelle angeordnet und bildet zusammen mit dem Zellengehäuse den Verschluß der Speicherzelle.

In der GB—A—1472975 ist eine elektrochemische Speicherzelle beschrieben, die becherförmig ausgebildet ist. Die Schwefelelektrode, welche zwischen dem Gehäuse und dem Festelektrolyten angeordnet ist, wird durch mehrere aus einem Kohlenstoffilz gefertigte Segmente gebildet, die den Kathodenraum vollständig ausfüllen und deren Längsachsen parallel zur Längsachse der Speicherzelle verlaufen.

Aus der GB—A—4243733 ist ebenfalls eine elektrochemische Speicherzelle bekannt, deren Schwefelelektrode durch eine Vielzahl von Segmenten gebildet wird. Diese sind aus einem Kohlenstoff-Filz oder einem Graphitfilz bzw. aus Fasern dieser Materialien hergestellt.

Der Erfindung liegt die Aufgabe zugrunde, eine elektrochemische Speicherzelle zu schaffen, bei der die Einwirkungen von zerstörenden Kräften auf den Festelektrolyten dauerhaft unterbunden werden.

Diese Aufgabe wird erfindungsgemäß durch die kennzeichnenden Merkmale des Patentanspruches 1 gelöst.

Eine weitere Lösung ist im Patentanspruch 2 offenbart.

Um von dem Festelektrolyten der Speicherzelle die störenden Scherkräfte fern zu halten, wird die Schwefelelektrode aus einem faserförmigen Material auf der Basis von Graphit oder Kohlenstoff hergestellt, wobei die Faserlänge des Materials höchstens 1/4 bis 3/4 der Breite der Schwefelelektrode aufweist. Erfindungsgemäß weist das die Schwefelelektrode bildende Material eine Teilchengröße auf, die etwa der halben Dicke der Schwefelelektrode entspricht.

Die Schwefelelektrode kann auf einfache Weise hergestellt werden. Hierfür werden aus dem bisher verwendeten langfasrigen Werkstoff aus Graphit oder Kohlenstoff Matten gefertigt, mit Schwefel getränkt, gepreßt und anschließend gemahlen. Hierdurch wird die für die Schwefelektrode gewünschte Größe des Materials erreicht. Die so gewonnenen Teilchen werden anschließend in den Kathodenraum gefüllt. Eine solche Schwefelelektrode weist bei aufgeladenem Zustand der Speicherzelle eine Porosität von 10 bis 50% auf. Die Porengröße des die Schwefelelektrode bildenden Materials beträgt etwa 0,5 bis 2 mm. Der Festelektrolyt wird vorzugsweise aus einem Betaaluminiumoxid gefestigt, das eine Bruchfestigkeit von ≥ 100 MPa aufweist. Durch die oben beschriebenen Maßnahmen wird die Zerreiß- und Zugfestigkeit der Schwefelelektrolde auf etwa 30% des Wertes gesenkt, die Schwefelelektroden mit dem herkömmlichen Aufbau aufweisen.

Alle erfindungsgemäßen Ausführungsformen der Speicherzelle weisen den Vorteil auf, daß der stabile zerreißfeste Faserverbund des Grafit- oder Kohlenstoffilzes bei der so ausgebildeten Schwefelelektrode gegenüber bekannten Ausführungsformen nicht mehr gegeben ist, so daß die von dem Fasermaterial und dem Natriumpolysulfid ausgehenden Scherkräfte auf ein nicht mehr störendes Minimum reduziert sind. Hierdurch wird eine besser zyklisierbare Speicherzelle geschaffen. Bei der Herstellung einer Schwefelelektrode, die durch kleine Faserteilchen gebildet wird, können prinzipiell billige Materialien, wie beispielsweise Matten aus Pechfasern verarbeitet werden. Durch die sich in der Schwefelelektrode bildenden Poren zwischen den Faserteilchen wird die Zugfestigkeit der Schwefelelektrode drastisch reduziert. Werden anstelle der Faserteilchen gepreßte Halbschalen verwendet, so wird durch das Einschneiden der Halbschalen bis zu einer Tiefe von mindestens 50% ihrer Dicke die Zerreißfestigkeit ebenfalls so stark gemindert, daß zerstörende Scherkräfte nicht mehr auftreten. Bei einer Speicherzelle mit dieser Schwefelelektrode wird die Zyklisierbarkeit ebenfalls verbessert.

Bei allen Ausführungsformen ist der elektrische Widerstand der Speicherzellen genau so niedrig wie bei den bisher bekannten Speicherzellen, deren Schwefelelektroden durch Halbschalen gebildet werden, die jedoch nicht eingeschnitten sind.

Weitere erfindungswesentliche Merkmale der Erfindung sind in den Unteransprüchen gekennzeichnet.

Die Erfindung wird nachfolgend anhand einer Zeichnung erläutert.

Figur 1: Eine elektrochemische Speicherzelle im Schnitt,

Figur 2: eine Variante der in Figur 1 dargestellten Speicherzelle,

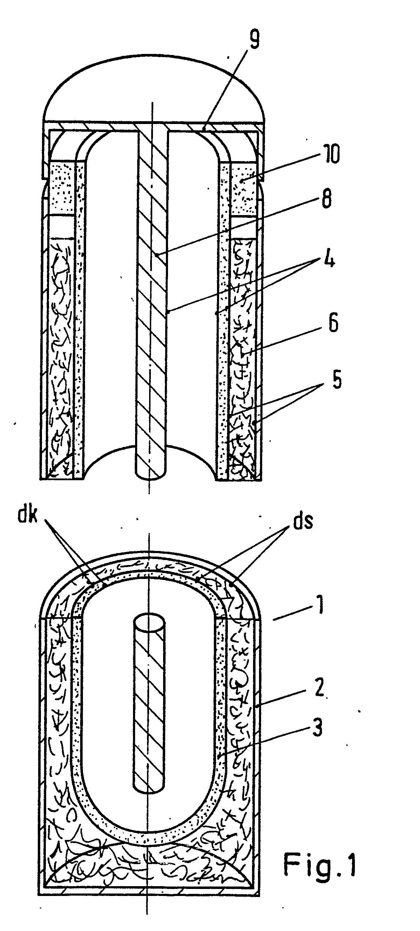

Die in der Figur 1 dargestellte Speicherzelle 1 wird nach außenhin durch ein metallisches Gehäuse 2 begrenzt, das bei dem hier dargestellten Ausführungsbeispiel becherförmig ausgebildet ist. Die Innenflächen des metallischen Gehäuses 2 sind mit einem Korrosionsschutz (hier nicht dargestellt) überzogen. Im Inneren des metallischen Gehäuses 2 ist der ebenfalls becherförmig ausgebildete Festelektrolyt 3 angeordnet. Er ist aus einem Betaaluminiumoxid gefertigt, das eine Bruchfestigkeit von größer gleich 100 MPa aufweist. Sein Innenraum dient als Anodenraum 4, der bei dieser Speicherzelle mit Natrium gefüllt ist. Die Abmessungen des Festelektrolyten 3 sind so gewählt, daß zwischen seinen Außenflächen und den Innenflächen des metallischen Gehäuses 2 ein zusammenhängender Zwischenraum verbleibt, der als Kathodenraum 5 dient. Der Kathodenraum 5 enthält die Schwefelelektrode 6, die aus einem Filz bzw. faserförmigen Material auf der Basis von Graphit oder Kohlenstoff gefertigt ist. Die Dicke $d_S$ der Schwefelelektrode 6 ist so gewählt, daß die Schwefelelektrode direkt an die Innenfläche des metallischen Gehäuses 2 und an die Außenfläche des Festelektrolyten 3 angrenzt. Die Dicke $d_S$ der Schwefelelektrode bildet mit der Wandstärke $d_K$ des Festelektrolyten 3 ein Verhältnis das einen definierten Wert p aufweist. Bei dem hier dargestellten Ausführungsbeispiel weist dieses Verhältnis einen Wert p = 4 auf. Zur Ausbildung der Schwefelelektrode 6 wird ein Filz oder faserförmiges Material verwendet, das aus Graphit oder Kohlenstoff gefertigt ist. Die Teilchen des in den Kathodenraum 5 eingefüllten Materials weisen eine Größe auf, die zwischen 1/4 und 3/4 der Dicke der Schwefelelektrode beträgt. Vorzugsweise weist das in den Kathodenraum eingefüllte Material eine Teilchengröße auf, die der halben Dicke der Schwefelelektrode entspricht. Das zur Bildung der Schwefelelektrode in den Kathodenraum 5 eingefüllte Material wird vor dem Einfüllen gepreßt, mit Schwefel getränkt und anschließend gemahlen, damit die Teilchen die oben beschriebene Größe aufweisen.

Das die Schwefelelektrode bildende Material muß so in den Kathodenraum eingefüllt werden, so daß dieses sowohl an den Festelektrolyten 3 als auch an das metallische Gehäuse 2 direkt angrenzt und überall ein enger Kontakt zwischen der Schwefelelektrode und dem metallischen Gehäuse bzw. dem Festelektrolyten gegeben ist. Das Material wird in einer solchen Dichte in den Kathodenraum eingefüllt, daß die Schwefelektrode 6 beim geladenen Zustand der Speicherzelle eine Porosität zwischen 10 und 50% aufweist. Dabei sollen Poren gebildet werden, die eine Porengröße von 0,5 bis 2 mm aufweisen. Die Abmessungen der Speicherzelle 1, insbesondere des Kathodenraums und die Wandstärke des Festelektrolyten sind so bemessen, daß zwischen der Dicke $d_S$ der Schwefelelektrode 6 und der Wandstärke $d_K$ des Festelektrolyten 3 ein Verhältnis vom Wert p erzielt wird, der zwischen 3 und 5 liegt. Bei der in Figur 1 dargestellten Speicherzelle 1 dient das metallische Gehäuse 2 als kathodischer Stromabnehmer, während in den Anodenraum 4 ein stabförmiger Stromkollektor 8 hineinreicht, der elektrisch leitend mit der Verschlußkappe 9 der Speicherzelle 1 verbunden ist. Der Festelektrolyt 3 ist an seinem oberen offenen Ende mit einem ringförmigen nach außen gerichteten Flansch versehen, der mit den Innenflächen des metallischen Gehäuses 2 fest verbunden ist. Die Breite des Flansches 10 ist so bemessen, daß durch ihn der zwischen dem Festelektrolyten 3 und dem metallischen Gehäuse 2 angeordnete Kathodenraum vollständig überdeckt und durch die feste Verbindung des Flansches 10 mit dem metallischen Gehäuse 2 nach außenhin gasdicht verschlossen wird. Die Verschlußkappe 9 der Speicherzelle 1 ist über den Flansch 10 gestülpt und dauerhaft mit diesem verbunden, so daß die Speicherzelle 1 hierdurch nach außenhin fest verschlossen ist.

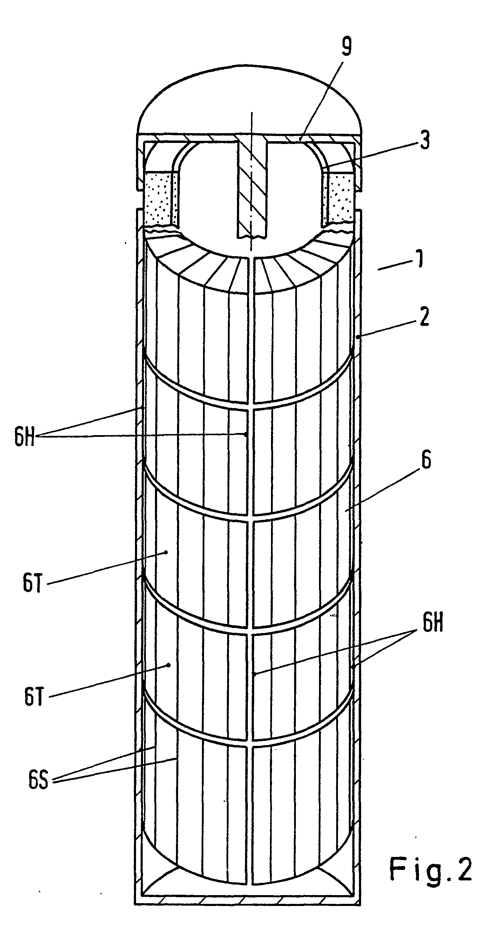

Die in Figur 2 dargestellte Variante der erfindungsgemäßen Speicherzelle unterscheidet sich von der in Figur 1 gezeigten Ausführungsform lediglich in der speziellen Ausgestaltung des Kathodenraums 5. Gleiche Bauteile sind deswegen mit gleichen Bezugszeichen versehen. Nach außenhin wird die Speicherzellen 1 durch ein metallisches Gehäuse 2 begrenzt, in dessen Innenraum der Festelektrolyt 3 angeordnet ist. Zwischen dem Festelektrolyten 3 und dem metallischen Gehäuse 2 ist auch hierbei der Kathodenraum 5 angeordnet, der die Schwefelelektrode 6 enthält. Diese wird bei der hier dargestellten Ausführungsform durch zwei Halbschalen 6H gebildet, die aus einem faserförmigen Material bestehend aus Kohlenstoff oder Grahpit hergestellt sind. Die Formen der beiden Halbschalen sind an die Geometrie des Festelektrolyten angepaßt. Die Menge des für die Herstellung der Halbschalen 6H verwendeten faserförmigen Materials wird so gewählt, daß die Halbschalen nach ihrer Fertigstellung, insbesondere ihrem Verpressen eine Dicke $d_S$ aufweisen. Insbesondere sind die beiden Halbschalen so dick gewählt, daß sie sowohl an den Festelektrolyten als auch an das metallische Gehäuse der Speicherzelle angrenzen und den Kathodenraum vollständig ausfüllen. Für die Fertigung der Halbschalen wird das oben erwähnte faserförmige Material zunächst mit Schwefel getränkt und anschließend in die gewünschten Halbschalen gepreßt, derart, daß durch die beiden Halbschalen der Festelektrolyt auf seiner Außenseite vollständig von diesen beiden Bauelementen umhüllt wird. Um die Zerstörung des Festelektrolyten durch einen sich beim Erkalten der Speicherzelle bildenden Ring aus Natriumpolysulfid zu vermeiden, wird der Grafitfilz vor oder nach dem Tränken mit Schwefel und anschließendem Verpressen durch Einschneiden oder Einsägen in das Halbschalenmaterial in Teilabschnitte 6T unterteilt. Vorzugsweise werden bei jeder Halbschale durch Einschnitte, die parallel zur ihrer Längsachse verlaufen und in definiertem Abstand voneinander angeordnet sind, Teilabschnitte 6T gebildet, deren Längsachsen parallel zur Längsachse des Festelektrolyten verlaufen. Vorzugsweise weist jeder Teilabschnitt eine Höhe von wenigstens 20 mm auf. An diese Längsunterteilung schließt sich eine senkrecht zur Längsachse des Festelektrolyten verlaufende Schnittfläche 6S, an, durch welche die oben gebildeten Teilabschnitte 6T der Halbschalen begrenzt werden. Auf diese senkrecht zur Längsachse des Festelektrolyten verlaufende Schnittfläche 6S folgen wieder mehrere parallel zur Längsachse des Festelektrolyten verlaufende Schnittflächen in radialer Richtung, wodurch weitere Teilabschnitte im Bereich einer jeden Halbschale gebildet werden. In dieser Weise wird jede Halbschale rundum und in Bereichen, die senkrecht untereinander angeordnet sind, in Teilabschnitte unterteilt. Durch diese Unterteilung der Halbschalen wird erreicht, daß sich beim Abkühlen der Speicherzelle kein geschlossener Ring aus Natriumpolysulfid um den Festelektrolyten bilden kann. Hierdurch werden die von diesem Ring ausgehenden Scherkräfte unterbunden und die Haltbarkeit des Festelektrolyten 3 vergrößert. Die Unterteilung der Halbschalen 6H ist nicht an die oben beschriebene Ausführungsform gebunden. Vielmehr ist jede Unterteilung möglich, durch welche die Bildung eines geschlossenen Natriumpolysulfidringes unterbunden wird. Die Halbschalen sind so mit Schwefel getränkt und so gepreßt, daß sie beim geladenen Zustand der Speicherzelle eine Porosität zwischen 10 und 50% aufweisen. Die Poren weisen auch bei diesen Halbschalen eine Größe von 0,5 bis 2 mm auf. Die Abmessungen der Speicherzelle 1, insbesondere des Kathodenraums 5 und der Schwefelelektrode 6 sind auch hierbei so gewählt, daß zwischen der Wandstärke des Festelektrolyten $d_K$ und der Dicke der Schwefelelektrode $d_S$ ein Verhältnis vom Wert p gebildet wird, das zwischen 2 und 5 liegt.

## Patentansprüche

1. Elektrochemische Speicherzelle auf der Basis von Natrium und Schwefel mit einem Anodenraum (4) und einem Kathodenraum (5), die durch einen Festelektrolyten (3) voneinander getrennt und wenigstens bereichsweise von einem metallischen Gehäuse (2) voneinander getrennt sind, wobei der Kathodenraum (5) zur Bildung der Schwefelelektrode (6) mit Fasermaterial aus Graphit oder Kohlenstoff, das mit Schwefel getränkt ist, ausgefüllt ist, dadurch gekennzeichnet, daß das Verhältnis zwischen der Dicke ($d_S$) der Schwefelelektrode (6) und der Wandstärke ($d_K$) des Festelektrolyten (3) einen Wert p zwischen 2 und 10, vorzugsweise zwischen 3 und 5 aufweist, daß das die Schwefelelektrode (6) bildende Material faserförmig ist und aus Kohlenstoff oder Graphit gefertigt, mit Schwefel getränkt, gepreßt und anschließend gemahlen ist, daß die Schwefelelektrode (6) eine Bruchfestigkeit von höchstens 40 MPa, vorzugsweise eine Bruchfestigkeit aufweist, die unterhalb von 15 MPa liegt, daß die Schwefelelektrode (6) eine Porosität von 10 bis 50% aufweist und die Porengröße 0,2 bis 2 mm beträgt, und daß der Festelektrolyt (3) aus Betaaluminiumoxid gefertigt ist, das eine Bruchfestigkeit von $\geq$ 100 MPa aufweist.

2. Elektrochemische Speicherzelle auf der Basis von Natrium und Schwefel mit einem Anodenraum (4) und einem Kathodenraum (5), die durch einen Festelektrolyten (3) voneinander getrennt und wenigstens bereichsweise von einem metallischen Gehäuse (2) voneinander getrennt sind, wobei der Kathodenraum (5) zur Bildung der Schwefelelektrode (6) mit Fasermaterial aus Graphit oder Kohlenstoff, das mit Schwefel getränkt ist, ausgefüllt ist, dadurch gekennzeichnet, daß das Verhältnis zwischen der Dicke ($d_S$) der Schwefelelektrode (6) und der Wandstärke ($d_K$) des Festelektrolyten (3) einen Wert p zwischen 2 und 10, vorzugsweise zwischen 3 und 5 aufweist, daß das die Schwefelelektrode (6) bildende Material faserförmig ist und aus Kohlenstoff oder Graphit gefertigt, daß die Schwefelelektrode (6) eine Bruchfestigkeit von höchstens 40 MPa, vorzugsweise eine Bruchfestigkeit aufweist, die unterhalb von 15 MPa liegt, daß die Schwefelelektrode (6) eine Porosität von 10 bis 50% aufweist und die Porengröße 0,2 bis 2mm beträgt, daß die Schwefelelektrode (6) durch wenigstens zwei Halbschalen (6H) gebildet ist, die an die äußere Form des Festelektrolyten (3) angepaßt, mit Schwefel getränkt, gepreßt und wenigstens bereichsweise in eine Vielzahl von Teilabschnitte (6T) durch Einschneiden und/oder Einsägen unterteilt sind, und daß der Festelektrolyt (3) aus Betaaluminiumoxid gefertigt ist, das eine Bruchfestigkeit von $\geq$ 100 MPa aufweist.

3. Speicherzelle nach Anspruch 2, dadurch gekennzeichnet, daß die Schwefelelektrode (6) durch wenigstens zwei Halbschalen (6H) gebildet ist, die an die Form des Festelektrolyten (3) angepaßt, mit Schwefel getränkt und gepreßt sind, und daß die Halbschalen (6H) aus Kohlenstoff oder Grafitfilz Einschnitte aufweisen, deren Tiefe mindestens 50% der Dicke der Halbschalen (6H) entspricht.

4. Speicherzelle nach einem der Ansprüche 1 bis 3, dadurch gekennzeichnet, daß das die Schwefelelektrode (6) bildende Material eine Teilchengröße aufweist, die 1/4 bis 3/4 der Dicke ($d_S$) der Schwefelektrode (6) entspricht.

5. Speicherzelle nach einem der Ansprüche 1 bis 4, dadurch gekennzeichnet, daß das die Schwefelektrode (6) bildende Material eine Teilchengröße aufweist, die der halben Dicke ($d_S$) der Schwefelelektrode (6) entspricht.

**Revendications**

1. Cellule d'accumulateur électrochimique à base de sodium et de soufre, comportant un volume anodique (4) et un volume cathodique (5) qui sont séparés l'un de l'autre par un électrolyte solide (3) et sont séparés l'un de l'autre, au moins par régions, par une enceinte métallique (2), le volume cathodique (5) étant rempli de matériau fibreux en graphite ou carbone imprégné de soufre, afin de former l'électrode au soufre (6), caractérisée par le fait que le rapport entre l'épaisseur ($d_S$) de l'électrode au soufre (6) et l'épaisseur ($d_K$) de l'électrolyte solide (3) présente une valeur p entre 2 et 10, de préférence entre 3 et 5, par le fait que le matériau formant l'électrode au soufre (6) est fibreux et réalisé à partir de carbone ou de graphite, imprégné de soufre, comprimé puis broyé, par le fait que l'électrode au soufre (6) présente une résistance à la rupture de 40 MPa au maximum, de préférence une résistance à la rupture inférieure à 15 MPa, par le fait que l'électrode au soufre (6) présente une porosité de 10 à 50%, la grosseur des pores valant 0,2 à 2 mm, et par le fait que l'électrolyte solide (3) est réalisé à partir d'oxyde d'aluminium béta présentant une résistance à la rupture égale ou supérieure à 100 MPa.

2. Cellule d'accumulateur électrochimique à base de sodium et de soufre, comportant un volume anodique (4) et un volume cathodique (5) qui sont séparés l'un de l'autre par un électrolyte solide (3) et sont séparés l'un de l'autre, au moins par régions, par une enceinte métallique (2), le volume cathodique (5) étant rempli de matériau fibreux en graphite ou carbone imprégné de soufre, afin de former l'électrode au soufre (6), caractérisée par le fait que le rapport entre l'épaisseur ($d_S$) de l'électrode au soufre (6) et l'épaisseur ($d_K$) de l'électrolyte solide (3) présente une valeur p entre 2 et 10, de préférence entre 3 et 5, par le fait que le matériau formant l'électrode au soufre (6) est fibreux et réalisé à partir de carbone ou de graphite, imprégné de soufre, comprimé puis broyé, par le fait que l'électrode au soufre (6) présente une résistance à la rupture de 40 MPa au maximum, de préférence une résistance à la rupture inférieure à 15 MPa, par le fait que l'électrode au soufre (6) présente une porosité de 10 à 50%, la grosseur des pores valant 0,2 à 2 mm, par le fait que l'électrode au soufre (6) est formée par au moins deux demi-coquilles (6H), lesquelles sont adaptées à la forme extérieure de l'électrolyte solide (3), imprégnées de soufre, comprimées et, au moins par régions, subdivisées en une pluralité de portions (6T) par incision et/ou sciage, et par le fait que l'électrolyte solide (3) est réalisé à partir d'oxyde d'aluminium béta présentant une résistance à la rupture égale ou supérieure à 100 MPa.

3. Cellule d'accumulateur selon revendication 2, caractérisée par le fait que l'électrode au soufre (6) est formée par au moins deux demi-coquilles (6H) qui sont adaptées à la forme de l'électrolyte solide (3), imprégnées de soufre et comprimées, et par le fait que les demi-coquilles (6H) en carbone ou feutre de graphite présentent des incisions dont la profondeur correspond au moins à 50% de l'épaisseur des demicoquilles (6H).

4. Cellule d'accumulateur selon l'une des revendications 1 à 3, caractérisée par le fait que le matériau formant l'électrode au soufre (6) présente une grosseur de particules correspondant à 1/4 à 3/4 de l'épaisseur (d) de l'électrode au soufre (6).

5. Cellule d'accumulateur selon l'une des revendications 1 à 4, caractérisée par le fait que le matériau formant l'électrode au soufre (6) présente une grosseur de particules correspondant à la moitié de l'épaisseur ($d_S$) de l'électrode au soufre (6).

## Claims

1. Electrochemical storage cell based on sodium and sulphur having an anode space (4) and a cathode space (5) which are separated from one another by a solid electrolyte (3) and are separated from one another, at least in some regions, by a metallic housing (2), the cathode space (5) being filled with fibre material of graphite or carbon impregnated with sulphur to form the sulphur electrode (6), characterized in that the ratio between the thickness ($d_S$) of the sulphur electrode (6) and the wall thickness ($d_K$) of the solid electrolyte (3) has a value p of between 2 and 10, preferably between 3 and 5, in that the material forming the sulphur electrode (6) is fibrous and is manufactured from carbon or graphite, impregnated with sulphur, pressed and then ground, in that the sulphur electrode (6) has a breaking strength of not more than 40 MPa, preferably a breaking strength of below 15 MPa, in that the sulphur electrode (6) has a porosity of 10 to 50% and the pore size is 0,2 to 2 mm, and in that the solid electrolyte (3) is manufactured from beta-aluminium oxide which has breaking strength of $\geq$ 100 MPa.

2. Electrochemical storage cell based on sodium and sulphur having an anode space (4) and a cathode space (5) which are separated from one another by a solid electrolyte (3) and are separated from one another, at least in some regions, by a metallic housing (2), the cathode space (5) being filled with fibre material of graphite or carbon impregnated with sulphur to form the sulphur electrode (6), characterized in that the ratio between the thickness ($d_S$) of the sulphur electrode (6) and the wall thickness ($d_K$) of the solid electrolyte (3) has a value p of between 2 and 10, preferably between 3 and 5, in that the material forming the sulphur electrode (6) is fibrous and is manufactured from carbon or graphite, in that the sulphur electrode (6) has a breaking strength of not more than 40 MPa, preferably a breaking strength below 15 MPa, in that the sulphur electrode (6) has a porosity of 10 to 50% and the pore size is 0.2 to 2 mm, in that the sulphur electrode (6) is formed by at least two half shells (6H) which fit the outer shape of the solid electrolyte (3), are impregnated with sulphur and pressed and are subdivided into a plurality of part sections (6T), at least in some regions, by notching and/or sawing, and in that the solid electrolyte (3) is manufactured from beta-aluminium oxide which has a breaking strength of $\geq$ 100 MPa.

3. Storage cell according to Claim 2, characterized in that the sulphur electrode (6) is formed by at least two half shells (6H) which fit the shape of the solid electrolyte (3) and are impregnated with sulphur and pressed, and in that the half shells (6H) of carbon or graphite felt have notches, the depth of which corresponds to at least 50% of the thickness of the half shells (6H).

4. Storage cell according to one of Claims 1 to 3, characterized in that the material forming the sulphur electrode (6) has a particle size which corresponds to 1/4 to 3/4 of the thickness ($d_S$) of the sulphur electrode (6).

5. Storage cell according to one of Claims 1 to 4, characterized in that the material forming the sulphur electrode (6) has a particle size which corresponds to half the thickness ($d_S$) of the sulphur electrode (6).

Fig.1

Fig.2